# EUROPEAN PATENT APPLICATION

(11) **EP 1 262 111 A1**
(43) Date of publication of application: **04.12.2002**
(21) Application number: 01610057.0
(22) Date of filing: 31.05.2001
(51) Int. Cl.: A23P 1/10, A23L 1/164, B01J 2/22, B30B 11/12, A23P 1/02

(54) **An apparatus for pressing granular food material**

(71) Applicant: Meincke A/S, 2740 Skovlunde (DK)
(72) Inventor: Henrichs, Holger, 3500 Vaerlose (DK)
(74) Representative: Jorgensen, Bjorn Barker

(57) **Abstract**

The apparatus is intended for pressing granular food material, for instance cereals having treacle or syrup as binding agent, for the formation of aggregates (13) and comprises: a rotatable cylinder (1) with a peripheral surface; cylindrical holes (2) opening into the peripheral surface; pistons (3) in the holes (2); a mechanism (4) in the cylinder (1) for moving the pistons (3) forward and backward depending on the rotation of the cylinder (1); a feeding device (6) for food material at a part of the periphery of the cylinder (1); drive means for driving the cylinder (1) in a rotational direction (14), and means for pressing material in cavities (5) above the pistons (3), said means comprising a pressing surface (7) which in abutment against the peripheral surface or at a small distance therefrom extends along a part of the periphery of the cylinder (1) and, seen in relation to the rotational direction, after the feeding device (6).

## Description

The present invention relates to an apparatus for pressing granular food material, for instance cereals having treacle or syrup as binding agent, for the formation of aggregates, said apparatus comprising a rotatable cylinder with a peripheral surface, cylindrical holes opening into the peripheral surface, pistons in the holes, a mechanism in the cylinder for moving the pistons forward and backward depending on the rotation of the cylinder, a feeding device for food material at a part of the periphery of the cylinder, drive means for driving the cylinder in a rotational direction, and means for pressing material in the holes.

Apparatuses of this type is for instance known from US-A-4 828 863 and EP-A-0 715 814, which both disclose apparatuses, in which the feeding device comprises a feeding hopper, in which the cylinder constitutes the bottom such that the holes are filled with material when passing beneath the feeding hopper; the mechanism for moving the pistons is a cam mechanism and the means for pressing the material in the holes comprise other pistons which from the outside press the material down into the holes. In both cases a discharge conveyor (conveyor belt) is provided under the cylinder for removing the compressed material and devices are provided for scraping or brushing off the material from the piston heads.

US-A-3 427 649 discloses a similar apparatus, however without means for compressing the material in the holes. The apparatus disclosed in this patent is provided with porous pistons, through which air can be blown to facilitate the removal of material (sugar icing) from the piston heads.

Also US-A-5 340 599 discloses a similar apparatus without compression of material in the holes.

Finally, US-A-2 012 682 discloses a similar apparatus for kneading dough, in which apparatus, succeeding the feeding device, as seen in the rotational direction, a belt is extending along the periphery of the cylinder and at a distance therefrom, whereby a lump of dough can be received in a hole to be subsequently pressed out of the hole to be kneaded/rolled between the belt and the peripheral surface for the formation of a dough ball.

The object of the invention is to provide an apparatus of the type mentioned by way of introduction by simple and economic means for pressing the material in the holes.

This object is met according to the invention in that the means for pressing material in the cavities comprise a pressing surface which in abutment against the peripheral surface or at a small distance therefrom extends along a part of the periphery of the cylinder, following the feeding device seen in relation to the rotational direction. In this way, the pistons in the holes may be used for performing the pressing and the need for additional pistons outside of the cylinder is eliminated. By "a small distance" is to be understood a distance so small that the material in the holes is not to a significant degreee pressed out into the interspace between the pressing surface and the peripheral surface. When compressing a granular material, "a small distance" may for instance mean a distance which is not substantially bigger or is smaller than the size of the grains.

In a preferred embodiment the pressing surface is a conveyor belt running over a number of rollers. Hereby may be attained that the pressing surface follows the movement of the peripheral surface, which is in particular an advantage in case of a sticky material. One of the rollers may be driven, whereby may be ensured that the pressing surface follows the movement of the peripheral surface.

The mechanism for moving the pistons is preferably adjustable to enable an adjustment of the compressing degree. The mechanism may in this connection be displaceable in a direction towards/away from the pressing surface.

Preferably, the mechanism for moving the pistons is designed in such a way that the size of the cavities is reduced by 0-95% in the pressing area. In this manner it is possible to obtain a suitable compression of the granular material.

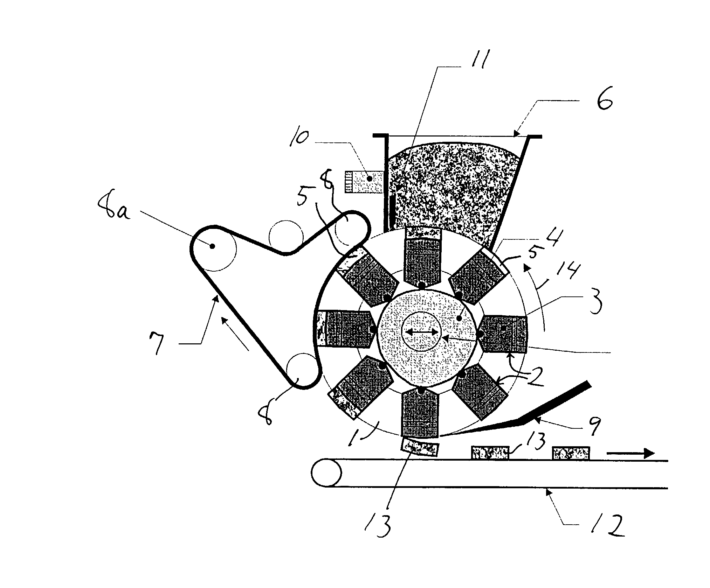

The invention will be explained in detail in the following by means of an example of an embodiment with reference to the drawing, the sole figure of which being a sectional view of an apparatus according to the invention viewed perpendicularly to the rotational axis of the cylinder.

The apparatus comprises a rotating cylinder 1 with cylindrical holes 2, in which pistons 3 are provided, said pistons being guided by a stationary cam member 4 in such manner that cavities 5 are created between the piston heads and the periphery of the cylinder 1, the size of said cavities varying during the rotation of the cylinder 1.

A feeding device in the form of a feeding container or hopper 6 for material is placed above the cylinder 1 and is provided with a shaking device 10 and a scraper knife 11. The cylinder 1 closes the feeding hopper 6 downwards.

A pressing belt 7 passed over rollers 8, one of which 8a being driven, is kept in abutment against and follows the movement of the cylinder 1, and thereby, the cavities 5 are closed along a part of their path in a pressing area.

Under the cylinder 1 a discharge conveyor 12 for cakes or aggregates 13 of material pressed in the cavities 5 is provided as well as a preferably oscillating knife 9 for scraping off material from the piston heads.

The apparatus functions as follows:

A material to be pressed into aggregates 13 in the cavities 5 is filled into the feeding hopper 6. The material may for instance be cereals like müsli, granola or some other granular material, and it may for instance contain treacle or syrup as a binding agent to ensure adhesion between the grains of the material.

The cylinder 1 is rotated by means of a drive (not shown) in the direction of the arrow 14.

The cam member 4 is designed in such manner that the cavities are biggest when they are in a filling position under the feeding hopper 6. The shaking device 10 ensures that the cavities 5 at this time are filled by granulate, and the scraping off knife 11 prevents excess granulate from being pulled out of the feeding hopper 6.

In the pressing zone, i.e. at the part of the path of the cavities 5, where they are closed by the pressing belt 7, the pistons 3 are moved outwards by the cam member 4, and the granulate is therefore compressed to a predetermined degree, preferably between 0 and 95%, such that an aggregate 13 is formed. When the cavities 5 reach a discharge position above the conveyor 12, they are reduced to zero, and the aggregate 13 drops out, possibly helped by the knife 9.

The degree of compression may be adjusted by horizontal displacement and/or turning of the cam member 4.

Various variants may be conceived:

The cam member 4 may for instance be replaced by piston rods connected by a stationary, but horizontally adjustable "crank" or some other known mechanism. The pressing belt may be replaced by a member having a smooth, stationary pressing surface. The oscillating knife may be replaced by a wire or a brush or other. Moreover, the feeding hopper 6 may be replaced by some other feeding device.

The pressing belt or the pressing surface may be kept in position or in abutment against the cylinder by a certain force, which may allow a certain resiliency to prevent the pressing force on the granular material from exceeding a desired maximum value. To obtain this, one of the rollers 8 may be resiliently suspended.

## Claims

1. An apparatus for pressing granular food material, for instance cereals having treacle or syrup as binding agent, for the formation of aggregates (13), said apparatus comprising:
- a rotatable cylinder (1) with a peripheral surface,
- cylindrical holes (2) opening into the peripheral surface,
- pistons (3) in the holes (2),
- a mechanism (4) in the cylinder (1) for moving the pistons (3) forward and backward depending on the rotation of the cylinder (1),
- a feeding device (6) for food material at a part of the periphery of the cylinder (1),
- drive means for driving the cylinder (1) in a rotational direction (14), and
- means for pressing material in cavities (5) above the pistons (3), **characterized in that** the means for pressing material in the cavities (5) comprise a pressing surface (7) which in abutment against the peripheral surface or at a small distance therefrom extends in a pressing zone along a part of the periphery of the cylinder (1) following the feeding device (6) seen in relation to the rotational direction (14).

2. An apparatus according to claim 1, **characterized in that** the pressing surface is constituted by a conveyor belt (7) running over a number of rollers (8, 8a).

3. An apparatus according to claim 2, **characterized in that** one of the rollers (8a) is driven.

4. An apparatus according to claims 1-3, **characterized in that** the mechanism (4) for moving the pistons is adjustable.

5. An apparatus according to claim 4, **characterized in that** the mechanism (4) is displaceable in a direction towards/away from the pressing surface (7).

6. An apparatus according to claims 1-5, **characterized in that** the mechanism (4) for moving the pistons (3) is designed in such a way that the size of the cavities (5) is reduced by 0-95% in the pressing zone.
